# EUROPÄISCHE PATENTANMELDUNG

(11) **EP 3 792 156 A1**
(43) Veröffentlichungstag der Anmeldung: **17.03.2021**
(21) Anmeldenummer: 20020362.8
(22) Anmeldetag: 10.08.2020
(51) Int. Cl.: B62D 33/04, E04G 11/04, E04H 15/20

(54) **ANORDNUNG, DESSEN HERSTELLUNGSVERFAHREN UND FAHRZEUG**

(30) Priorität: 13.08.2019 DE 102019005780; 25.10.2019 DE 102019007576
(71) Anmelder: Gosch, Claus, 21279 Wenzendorf (DE); Fürstenberg, Malte, 20539 Hamburg (DE)
(72) Erfinder: Gosch, Claus, 21279 Wenzendorf (DE); Fürstenberg, Malte, 20539 Hamburg (DE)

(57) **Zusammenfassung**

Anordnung (1) mit einer Decke (3, 3a, 3b) und zumindest einer Seitenwand (5a, 5b). Durch die Decke (3, 3a, 3b) und die zumindest eine Seitenwand (5a, 5b) ist ein Aufenthaltsraum für zumindest eine Person gebildet. Die Decke (3, 3a, 3b) umfasst zumindest ein erstes aufblasbares und/oder evakuierbares Volumenelement (3, 3a, 3b), das jeweils aus einer flexiblen ersten und einer flexiblen zweiten Deckschicht (16a, 16b) und einer dazwischen angeordneten Zwischenstruktur (18) gebildet ist. Die Zwischenstruktur (18) ist ausgebildet, die erste Deckschicht (16a) mit der zweiten Deckschicht (16b) derart mechanisch zu koppeln, dass in einem aufgeblasenen und/oder evakuierten Zustand die erste Deckschicht von der zweiten Deckschicht vorgegeben beabstandet ist.

## Beschreibung

Die Erfindung betrifft eine Anordnung mit einem ersten aufblasbaren und/oder evakuierbaren Volumenelement und dessen Herstellungsverfahren sowie ein Fahrzeug mit einer solchen Anordnung.

Die DE102016015642 offenbart eine Transportbox aus einem aufblasbaren Drop-Stitch Material. Dabei sind die zwei Seitenwände, die Rückwand und der Boden der Transportbox aus einem Stück Drop-Stitch-Panel gefertigt. Eine Vorderseite und eine Decke der Transportbox sind aufrollbar, wobei die Decke mit Reißverschlüssen an den Seitenwänden befestigt werden kann.

Die WO 2016/145239 offenbart eine Kühlbox, die zumindest teilweise aus einem Drop-Stitch Material hergestellt ist.

Die DE102012103948 offenbart einen Körper mit einer Innenkammer, die mit einem Gas aufblasbar ist. Ferner weist der Körper eine Außenkammer auf, die mit einem granularen Material gefüllt ist. Die Außenkammer ist entlüftbar bzw. evakuierbar ausgebildet und kann somit mit einem Unterdruck beaufschlagt werden. Ist die Innenkammer aufgeblasen und die Außenkammer evakuiert, ergibt sich ein Körper mit hoher Steifigkeit.

Die Aufgabe, die der Erfindung zugrunde liegt, ist es, einen möglichst flexibel ausgestaltbaren und gleichzeitig leichten Aufenthaltsraum für ein oder mehrere Personen vorzuschlagen.

Die Aufgabe wird gelöst durch die Merkmale der unabhängigen Patentansprüche. Vorteilhafte Ausgestaltungen der Erfindung sind in den Unteransprüchen angegeben.

Die Erfindung zeichnet sich gemäß einem ersten Aspekt aus durch eine Anordnung mit einer Decke und zumindest einer Seitenwand. Durch die Decke und die zumindest eine Seitenwand ist ein Aufenthaltsraum gebildet für zumindest eine Person. Die Decke ist aus zumindest einem ersten aufblasbaren und/oder evakuierbaren Volumenelement gebildet, das jeweils aus einer flexiblen ersten und einer flexiblen zweiten Deckschicht und einer dazwischen angeordneten Zwischenstruktur gebildet ist. Die Zwischenstruktur ist ausgebildet, die erste Deckschicht mit der zweiten Deckschicht derart mechanisch zu koppeln, dass in einem aufgeblasenen und/oder evakuierten Zustand die erste Deckschicht von der zweiten Deckschicht vorgegeben beabstandet ist.

Das zumindest eine erste Volumenelement wird in Form der Decke als statisch relevantes Element für die tragende Struktur der Anordnung verwendet. Dabei befindet sich das jeweils erste Volumenelement in einem Nutzungszustand, d.h. es liegt in einem aufgeblasenen und/oder evakuierten Zustand vor. Dabei bildet die Anordnung mit dem zumindest einen ersten Volumenelement einen Aufenthaltsraum für ein oder mehrere Personen. Unter einem Aufenthaltsraum ist jeder Raum zu verstehen, in dem sich eine oder mehrere Personen über einen kurzen oder auch längeren Zeitraum aufhalten können, um sich vor Witterungseinflüssen zu schützen.

Das jeweilige Volumenelement bildet typischerweise ein plattenförmiges Element und kann somit auch als Flächenvolumenelement bezeichnet werden, da es typischerweise eine Länge und eine Breite aufweist, die jeweils größer ist als eine Dicke des Elementes. Das jeweilige Volumenelement ist zumindest teilweise aufblasbar, so z.B. mit Luft, um seinen Nutzungszustand einzunehmen. Um einen erschlafften Zustand einzunehmen, ist der aufgeblasene Anteil des jeweiligen Volumenelementes zu entlüften. Darüberhinaus kann das Volumenelement auch teilweise evakuierbar sein, um durch die Beaufschlagung mit einem Unterdruck seinen Nutzungszustand einzunehmen. Um einen erschlafften Zustand einzunehmen, ist der evakuierte Anteil des Volumenelementes zu belüften. Natürlich kann das Volumenelement auch entweder aufblasbar oder evakuierbar sein, um den Nutzungszustand einzunehmen.

Die Decke kann auf der zu einem Innenraum der Anordnung abgewandten Deckschicht ein Dach bilden, welches den Witterungseinflüssen ausgesetzt ist. Dabei kann die Decke ein oder mehrerer erste aufblasbare und/oder evakuierbare Volumenelemente umfassen. Die als Dach ausgebildete Decke kann in unterschiedlichen Formen ausgebildet und angeordnet sein, so z.B. als Flach-, Sattel- oder Walmdach.

Der Aufbau des jeweiligen Volumenelementes mit der ersten und zweiten Deckschicht und der dazwischen angeordneten Zwischenstruktur ermöglicht im aufgeblasenen und/oder evakuierten Zustand ein biegesteifes und formstabiles Element. Um einen aufblasbaren und/oder evakuierbaren Raum in der Zwischenstruktur zwischen der ersten und zweiten Deckschicht zu ermöglichen, sind die Kanten beispielsweise mittels einer Abschlusslasche versiegelt. Diese Abschlusslasche verläuft dabei vorzugsweise im Bereich der jeweiligen Kante zwischen der ersten und zweiten Deckschicht und ist an dieser jeweils fluiddicht befestigt, so z.B. verklebt und/oder vernäht, etc. Die Abschlusslasche ist vorzugsweise aus dem gleichen Material und kann den gleichen Aufbau aufweisen als die erste oder zweite Deckschicht.

Vorzugsweise ist die jeweilige Deckschicht aus einem Kunststoffmaterial, so z.B. PVC, Polycotton oder Nylon gebildet. In dem aufgeblasenen und/oder evakuierten Zustand umfasst die jeweilige Deckschicht keine sichtbaren Wölbungen und/oder großflächige Vertiefungen, weist also eine im Wesentlichen glatte, kontinuierlich verlaufende Oberfläche auf. Vorzugsweise ist die Zwischenstruktur ausgebildet, die erste und die zweite Deckschicht derart mechanisch zu koppeln, dass in einem aufgeblasenen und/oder evakuierten Zustand die erste Deckschicht zu der zweiten Deckschicht über die Erstreckung der Zwischenstruktur vorgegeben beabstandet ist. Dabei kann der Abstand über die Erstreckung der Zwischenstruktur konstant sein. Alternativ kann der Abstand zwischen der ersten und zweiten Deckschicht über die Erstreckung der Zwischenstruktur aber auch variieren. Wesentlich ist hier, dass dieser vorgegebene Abstand zwischen der ersten und zweiten Deckschicht auch bei einer Belastung im Wesentlichen unverändert bleibt.

Die Zwischenschicht erstreckt sich im Wesentlichen über die gesamte Erstreckung des ersten Volumenelementes. Damit kann mittels der Zwischenstruktur gewährleistet werden, dass der vorgegebene Abstand zwischen der ersten und zweiten Deckschicht in einem weiten Über- und/oder Unterdruckbereich über die Erstreckung des ersten Volumenelementes eingehalten werden kann. Gleichzeitig kann dadurch eine hohe Druckfestigkeit und Biegesteifigkeit des jeweiligen ersten Volumenelementes erreicht werden. Dadurch kann das jeweilige Volumenelement auch besonders stark belastet werden.

"Aufblasbar" bedeutet in diesem Zusammenhang, dass das jeweilige Volumenelement mit einem Gas, so z.B. Luft, befüllbar und somit zumindest teilweise mit einem Überdruck beaufschlagbar ist, um seinen Nutzungszustand einzunehmen. "Evakuierbar" bedeutet dagegen, dass das jeweilige Volumenelement zumindest teilweise mit einem Unterdruck beaufschlagbar ist, um seinen Nutzungszustand einzunehmen.

Der Zwischenstruktur des jeweiligen ersten Volumenelementes können mehrere fluidisch getrennte Kammern zugeordnet sein. Jede Kammer kann dabei separat entweder aufblasbar oder evakuierbar sein. Dazu kann jeder Kammer zumindest ein Ventil zugeordnet sein. Die Zwischenstruktur kann ferner zumindest eine erste Kammer, die mit einem Überdruck beaufschlagbar ist, und zumindest eine zweite Kammer, die mit einem Granulat gefüllt und mit einem Unterdruck beaufschlagbar ist, umfassen. Dabei ist die erste Kammer von der zweiten Kammer fluidisch getrennt. Beispielsweise umfasst die Zwischenstruktur des jeweiligen Volumenelementes mehrere erste Kammern und mehrere zweite Kammern. Die Kammerwände der mehreren Kammern repräsentieren dabei die mechanische Kopplung zwischen der ersten und zweiten Deckschicht. Die zumindest eine zweite Kammer ist vorzugsweise mit einem Granulat gefüllt. Dadurch wird in einem evakuierten Zustand der zumindest einen zweiten Kammer eine hohe Reibung zwischen den Granulatpartikeln erreicht, woraus eine hohe Steifigkeit insbesondere Drucksteifigkeit und Biegesteifigkeit dieser zumindest einen zweiten Kammer resultiert. In diesem Fall repräsentiert das Granulat in der zumindest einen zweiten Kammer im evakuierten Zustand zusätzlich die mechanische Kopplung zwischen der ersten und zweiten Deckschicht. Das Granulat in der zumindest einen zweiten Kammer kann beispielsweise als Kunststoff- oder Biogranulat ausgebildet sein. Besonders vorteilhaft ist eine Ausgestaltung, in der zumindest eine zweite Kammer über die Längserstreckung des jeweiligen ersten Volumenelementes verläuft. Die zumindest eine erste und die zumindest eine zweite Kammer und die zugeordneten Kammerwände repräsentieren dabei die mechanische Kopplung zwischen der ersten und zweiten Deckschicht. In dieser Ausgestaltung ist die Zwischenstruktur vorzugsweise ausgebildet, die erste und die zweite Deckschicht derart mechanisch zu koppeln, dass im aufgeblasenen und evakuierten Zustand die erste und zweite Deckschicht über die Erstreckung der Zwischenstruktur im Wesentlichen parallel verlaufen. Alternativ kann die mechanische Kopplung zwischen der ersten und zweiten Deckschicht derart mittels der Zwischenschicht ausgebildet sein, dass der Abstand zwischen der ersten und zweiten Deckschicht variiert.

Alternativ kann die Zwischenstruktur des jeweiligen ersten Volumenelementes derart ausgebildet sein, dass zwischen der ersten Deckschicht und der zweiten Deckschicht eine Vielzahl gleichlanger Stabilisierungsfäden verlaufen. Eine solche Ausführung entspricht einer sogenannten Drop-Stitch Struktur mit einer Vielzahl von Stabilisierungsfäden zwischen der ersten und zweiten Deckschicht. Auch bietet ein solcher Aufbau des jeweiligen ersten Volumenelementes eine besonders hohe Formstabilität und weist gleichzeitig eine hohe Reißfestigkeit auf. Vorzugsweise wird das jeweilige erste Volumenelement mit einer Drop-Stitch Struktur mit einem Überdruck beaufschlagt. Dabei kann mittels der Drop-Stitch Struktur auch bei einem sehr hohen Überdruck die vorgegebene Form des Volumenelementes beibehalten werden. Dabei können der Zwischenstruktur ein oder mehrere Kammern zugeordnet sein. Sofern der Zwischenstruktur mehrere Kammern zugeordnet und diese jeweils als Drop-Stitch Struktur ausgeführt sind, kann durch die Beaufschlagung unterschiedlich vorgegebener Überdrücke über die Kammern verteilt das Volumenelement an seine gewünschte Verwendung angepasst werden. Vorzugsweise kann das jeweilige Volumenelement oder einzelne Kammern mit der Drop-Stitch Struktur jeweils auf einen Überdruckbereich zwischen 0,3 und 2 Bar aufgeblasen werden.

Die Stabilisierungsfäden bilden die mechanische Kopplung zwischen der ersten und zweiten Deckschicht. Die Länge der Stabilisierungsfäden gibt dabei im Wesentlich die Dicke des jeweiligen Volumenelementes über seine Erstreckung vor. Vorzugsweise beträgt die Dicke des Volumenelementes etwa 20 cm. Aber auch Dicken von 10 oder 15 cm sind beispielsweise möglich. In dieser Ausgestaltung ist die Zwischenstruktur vorzugsweise ausgebildet, die erste und die zweite Deckschicht derart mechanisch zu koppeln, dass im aufgeblasenen Zustand die erste und zweite Deckschicht über die Erstreckung der Zwischenstruktur im Wesentlichen parallel verlaufen.

Vorzugsweise ist das zumindest eine erste Volumenelement auf der zu einem Innenraum der Anordnung abgewandten Deckschicht durch zumindest eine Person begehbar. Das bedeutet, dass das als Decke ausgebildete erste Volumenelement statisch derart belastbar ist, dass zumindest eine Person diese betreten kann, ohne dass das erste Volumenelement versagt. Dabei besteht die Funktion des zumindest einen ersten Volumenelementes darin, den Aufenthaltsraum sicher vor Witterungseinflüssen auch bei Belastungen durch beispielsweise Starkregen und/oder starken Schneefall zu schützen. Während allen dieser Belastungsfälle ist sichergestellt, dass die mechanische Kopplung zwischen der ersten und zweiten Deckschicht mittels der Zwischenstruktur gewährleistet ist und die erste und zweite Deckschicht unversehrt bleibt.

In einer vorteilhaften Ausgestaltung des ersten Aspekts ist das als Decke ausgebildete zumindest eine erste Volumenelement gekrümmt oder geknickt. Das hat den Vorteil, dass das zumindest eine erste Volumenelement bei einer Belastung durch Witterungseinflüsse wie z.B. Starkregen oder Schnee, oder das Betreten durch zumindest eine Person bereits der Belastung durch die Krümmung entgegenwirkt. Dabei ist die Krümmung oder der Knick vorzugsweise nach außen, d.h. vom Innenraum weg, gerichtet. Damit kann die Stabilität der Anordnung erheblich gesteigert werden.. Die Krümmung oder der Knick kann durch das zumindest eine erste Volumenelement selbst bewirkt sein und/oder von außen, durch die zumindest eine Seitenwand vorgegeben sein.

In einer weiteren vorteilhaften Ausgestaltung des ersten Aspekts ist die zumindest eine Seitenwand aus zumindest einem zweiten aufblasbaren und/oder evakuierbaren Volumenelement gebildet, welches jeweils analog zu dem ersten Volumenelement ausgebildet ist. Das zweite Volumenelement ist in einem aufgeblasenen und/oder evakuierten Zustand mit dem als Decke ausgebildeten zumindest einen ersten Volumenelement gekoppelt. Ist neben der Decke auch zumindest eine Seitenwand als zumindest ein Volumenelement ausgebildet, ergibt sich eine besonders leichte Anordnung.

Ist das jeweilige zweite Volumenelement analog zu dem jeweiligen ersten Volumenelement ausgebildet, bedeutet dass, dass der Aufbau des zweiten Volumenelementes im Wesentlichen identisch ist. Das heißt, auch das zweite Volumenelement umfasst eine erste und eine zweite Deckschicht sowie eine dazwischen angeordnete Zwischenstruktur, um die erste und zweite Deckschicht derart mechanisch zu koppeln, dass in einem aufgeblasenen und/oder evakuierten Zustand beide Deckschichten vorgegeben beabstandet sind oder der Abstand zwischen den beiden Deckschichten vorgegeben variiert. Auch ist das zweite Volumenelement aufblasbar und/oder evakuierbar.

Da das jeweilige zweite Volumenelement im aufgeblasenen und/oder evakuierten Zustand eine hohe Biegesteifigkeit aufweist, kann dieses zumindest teilweise als tragende Seitenwand und somit als statisch relevantes Element der Anordnung ausgebildet sein.

Das jeweilige erste und zweite Volumenelement können direkt miteinander gekoppelt sein. So können beide Volumenelemente beispielsweise miteinander geklebt, vernäht und/oder verschweißt sein. Alternativ oder zusätzlich können zwischen dem ersten und zweiten Volumenelement Kopplungselemente angeordnet sein, die beide Volumenelemente miteinander koppeln, so z.B. H-Eckprofile. Auch eine Kopplung über werkzeuglose Verbindungsmittel wie Reiß- oder Klettverschlüsse oder Ringe und Gurte sind grundsätzlich möglich. Allen Kopplungen ist aber gemeinsam, dass auch an den Verbindungsstellen zwischen den Volumenelementen ein Schutz gegen Witterungseinflüsse gegeben ist. Dazu können die Verbindungsstellen zusätzlich mit Folien, so z.B. PVC-Klebefolien, abgedeckt sein.

Das jeweils als Seitenwand ausgebildete zweite Volumenelement umfasst vorzugsweise Inserts oder andere Befestigungsaufnahmen an oder in der dem Innenraum zugewandten Deckschicht. An diesen kann dann später weiteres Zubehör oder eine weitere Ausstattung befestigt werden, so z.B. Möbel wie Hängeschränke oder ähnliches. Alternativ oder zusätzlich kann an den Inserts oder Befestigungsaufnahmen des jeweiligen zweiten Volumenelements zumindest teilweise eine Innenraumverkleidung befestigt werden, so z.B. eine Holzverschalung, an der weitere Ausstattungsgegenstände direkt befestigt werden können.

In einer weiteren vorteilhaften Ausgestaltung des ersten Aspekts umfasst die Anordnung einen Boden, der aus zumindest einem dritten aufblasbaren und/oder evakuierbaren Volumenelement gebildet ist, welches analog zu dem ersten Volumenelement ausgebildet ist. Ist neben der Decke auch der Boden als zumindest ein Volumenelement ausgebildet, ergibt sich eine besonders leichte Anordnung.

Ist das jeweilige dritte Volumenelement analog zu dem ersten Volumenelement ausgebildet, bedeutet dass, dass der Aufbau identisch ist. Das heißt, auch das dritte Volumenelement umfasst eine erste und eine zweite Deckschicht sowie eine dazwischen angeordnete Zwischenstruktur, um die erste und zweite Deckschicht derart mechanisch zu koppeln, dass in einem aufgeblasenen und/oder evakuierten Zustand beide Deckschichten vorgegeben beabstandet sind oder der Abstand zwischen beiden Deckschichten vorgegeben variiert. Auch das dritte Volumenelement ist aufblasbar und/oder evakuierbar ausgebildet.

Um eine Standsicherheit der Anordnung zu gewährleisten, kann das als Boden ausgebildete dritte Volumenelement Befestigungselemente aufweisen, mit denen die Anordnung in der Erde oder am jeweiligen Standort befestigt werden kann, um ein ungewolltes Verschieben oder Verrücken zu verhindern. Alternativ oder zusätzlich kann das jeweilige dritte Volumenelement auch beschwert werden, so z.B. durch eine zumindest teilweise Befüllung mit Wasser. Dies hätte den Vorteil, dass der Boden dann gleichzeitig als Brauchwassertank dienen kann.

Auch können mehrere dritte Volumenelemente übereinander angeordnet sein. Das erhöht eine Wärmeisolierung zwischen dem Innenraum der Anordnung und dem Bereich, auf dem der Boden aufliegt.

In einer weiteren vorteilhaften Ausgestaltung des ersten Aspekts umfasst die Anordnung zumindest eine Zwischenwand, die jeweils zwischen dem Boden und der Decke angeordnet ist. Die Zwischenwand kann als weiteres aufblasbares und/oder evakuierbares Volumenelement und damit analog zu dem ersten Volumenelement ausgebildet sein. Die Zwischenwand kann aber auch herkömmlich, so z.B. als Holz- oder Leichtbauwand, ausgebildet sein. Dabei kann die Zwischenwand beispielsweise mit dem Boden und der Decke verklebt, vernäht, verschweißt oder verschraubt sein. Zum Verschrauben kann das als Decke ausgebildete zumindest eine erste Volumenelement und/oder das als Boden ausgebildete zumindest eine dritte Volumenelement in der jeweiligen dem Innenraum zugewandten Deckschicht ein oder mehrere Inserts umfassen, in die entsprechende passende Schrauben befestigt werden können, ohne den Boden oder die Decke zu beschädigen. Auch eine werkzeuglose Befestigung der Zwischenwand mittels Reiß- und Klettverschluss sowie mittels Gurten und Ringen ist beispielsweise möglich.

In einer weiteren vorteilhaften Ausgestaltung des ersten Aspekts weist zumindest ein Volumenelement der Anordnung zumindest ein Stabilisierungselement vorgegebener Länge und Breite auf, das auf oder in der zugeordneten ersten oder zweiten Deckschicht angeordnet und in Längs- und/oder Querrichtung verläuft und dabei ausgebildet ist, im Nutzungszustand des jeweiligen Volumenelementes eine zusätzliche Steifigkeit des Volumenelementes zu bewirken. Das zumindest eine Stabilisierungselement ist beispielsweise flexibel ausgebildet und weist ein hohes Elastizitätsmodul und eine hohe Zugfestigkeit auf und bewirkt damit eine zusätzliche Versteifung des Volumenelementes. Beispielsweise ist das Stabilisierungselement als ein Faserband oder Faserstreifen ausgebildet, das bzw. der Fasern umfasst, die in Faserrichtung ein hohes Elastizitätsmodul aufweisen und besonders zugfest sind. Beispielsweise kann das Faserband oder der Faserstreifen synthetische Fasern wie z.B. Aramid-, Polyethylen-, CFK/ GFK-Fasern, oder Naturfasern, wie z.B. Baumwoll- oder Hanffasern, umfassen. Eine Breite des Faserbandes oder Faserstreifens kann beispielsweise zwischen einigen Millimetern und einigen Zentimetern liegen und sich in Quer- und/oder Längsrichtung erstrecken. Alternativ kann das Stabilisierungselement auch großflächig als Faserlage ausgebildet sein und auf oder in zumindest einer der Deckschichten angeordnet sein. Wird beispielsweise das jeweilige Volumenelement auf einer Seite belastet, so kann das Stabilisierungselement auf der der Belastung gegenüberliegenden Seite des Volumenelementes auf oder in der zugeordneten Deckschicht angeordnet bzw. integriert werden. Dadurch wirkt das Stabilisierungselement der Belastung aufgrund des hohen Elastizitätsmoduls und der Zugfestigkeit entgegen. Eine aus der Belastung resultierende Durchbiegung des Volumenelementes kann dadurch reduziert werden. Auch andere Ausführungen des Stabilisierungselements sind grundsätzlich anwendbar, so z.B. steife Trägerelemente, wie Metall- oder Holzprofile.

In einer weiteren vorteilhaften Ausgestaltung des ersten Aspekts ist der Anordnung eine Überwachungseinheit zugeordnet, die ausgebildet ist, den Überdruck und/oder Unterdruck in dem zumindest einem Volumenelement zu überwachen. Dies hat den Vorteil, dass mittels der Überwachungseinheit sichergestellt ist, dass der in dem jeweiligen Volumenelement erforderliche Überdruck und/oder Unterdruck ständig überwacht wird. Dabei kann abhängig von der Überwachung der erforderliche Überdruck und/oder Unterdruck auch mittels der Überwachungseinheit bereitgestellt werden. Dazu kann die Überwachungseinheit mit einem Kompressor und/oder einer Vakuumpumpe gekoppelt sein oder einen solchen umfassen, um den Überdruck und/oder Unterdruck bereitstellen zu können.

Grundsätzlich können auch mehrere Anordnungen an- und/oder übereinander angeordnet werden. Dabei kann beispielweise eine Seitenwand einer ersten Anordnung auch die Seitenwand einer zweiten benachbarten Anordnung bilden. Auch kann die Decke einer ersten Anordnung den Boden einer darüber angeordneten weiteren Anordnung bilden. Dies ist besonders dann vorteilhaft, wenn mehrere Anordnungen als ein Gebäude oder Bauwerk ausgebildet sind. Die Verwendung von ein oder mehreren Volumenelementen für ein Gebäude oder Bauwerk ist dahingehend vorteilhaft, da jedem Volumenelement durch den Aufbau eine sehr gute Wärme- und Akustikisolation zugeordnet ist, wodurch ein weiterer Isolationsaufwand reduziert oder ganz eingespart werden kann. Dabei kann die zumindest eine Anordnung bzw. das Gebäude oder Bauwerk beispielweise als Tiny-House ausgebildet sein. Somit sind grundsätzlich alle Merkmale der Anordnung auch auf ein entsprechend ausgebildetes Gebäude oder Bauwerk anwendbar.

Das als Boden ausgebildete zumindest eine dritte Volumenelement der jeweiligen Anordnung kann Öffnungen umfassen, die jeweils in Dickenrichtung von der ersten bis zur zweiten Deckschicht und auch durch die jeweilige Deckschicht reicht. Diese Öffnungen ermöglichen es z.B. eine Wasser-, Strom- und/oder Gasversorgung in den Innenraum der Anordnung sowie eine Entsorgung von Abwasser aus dem Innenraum zu führen.

Ferner können in den jeweiligen Volumenelementen der Anordnung bereits Leitungen, so z.B. elektrische Leitungen, Wasserversorgung- und Abwasserentsorgungsleitungen, etc. integriert sein. Diese Leitungen sind typischerweise flexibel ausgebildet und werden schon während der Herstellung des jeweiligen Volumenelementes in die Zwischenstruktur integriert. An den Verbindungsstellen mehrerer Volumenelemente können die integrierten Leitungen dann miteinander gekoppelt werden. Die integrierten Leitungen können dann mit einer Ver- und Entsorgungsinfrastruktur im Innenraum der Anordnung gekoppelt werden.

Die Erfindung zeichnet sich gemäß einem dritten Aspekt aus durch ein Fahrzeug mit einer Anordnung nach dem ersten Aspekt. Aufgrund der gewichtsreduzierten Ausführung mit zumindest einem Volumenelement, ist die Anordnung besonders gut und effizient für die Verwendung als Kabine für ein Fahrzeug geeignet. Dabei kann das Fahrzeug als Landfahrzeug so z.B. als Wohnmobil oder Wohnanhänger ausgebildet sein. Beispielsweise ist die Kabine als Wohnkabine ausgebildet.

Grundsätzlich sind alle Merkmale der Anordnung auch auf die als Kabine ausgebildete Anordnung des Fahrzeugs anwendbar.

Dabei kann beispielsweise die zumindest eine Seitenwand der Anordnung als ein Teil eines herkömmlichen Fahrzeugaufbaus ausgebildet sein, so z.B. aus Metallblech, Holz, etc. an dem das als Fahrzeugdecke bzw. -dach ausgebildete zumindest eine erste Volumenelement befestigt ist. Dabei kann das zumindest eine erste Volumenelement auch nur einen Teil des Fahrzeugdaches bilden.

Besonders vorteilhaft ist die Anordnung dann, wenn das als Decke bzw. Dach ausgebildete zumindest eine erste Volumenelement der Anordnung in dem aufgeblasenen und/oder evakuierten Zustand, d.h. im Nutzungszustand, kipp-, schwenk und/oder verschiebbar an der zumindest einen Seitenwand befestigt ist, so z.B. ähnlich eines Klapp- oder Hubdaches oder eines Schiebedaches. Unter dem Begriff schiebbar ist dann nicht nur eine seitliche Verschiebung, sondern auch die Ausführung abgedeckt, bei der das als Fahrzeugdecke bzw. -dach ausgebildete zumindest eine erste Volumenelement nach oben hin verschiebbar ist. Das bedeutet, dass sich ein oder mehrere erste Volumenelement derart nach oben hin verschieben lassen, dass sich die Höhe in diesem Bereich des Aufenthaltsraumes erhöht. Für diese jeweilige Schwenk- bzw. Verschiebefunktion können Mittel vorhanden sein, die das zumindest eine erste Volumenelement in der jeweiligen geschwenkten bzw. verschobenen Position halten, so z.B. an der jeweiligen Seitenwand befestigte Scharniere oder schwenkbare Klappen. Im nichtgeschwenkten bzw. nichtverschobenen Zustand können Verriegelungselemente vorhanden sein, die ein unbeabsichtigtes Öffnen oder Verschieben des jeweiligen Volumenelementes verhindern so z.B. an der jeweiligen Seitenwand befestigte Kompressions- oder Spannverschlüsse, die in entsprechende Mittel an dem jeweiligen Volumenelement greifen, so z.B. D-Ringe.

Wenn das als Fahrzeugdecke ausgebildete zumindest eine erste Volumenelement dann auch noch mit zumindest einem Stabilisierungselement vorgegebener Länge und Breite ausgebildet ist, welches auf oder in der zugeordneten ersten oder zweiten Deckschicht des jeweiligen ersten Volumenelementes angeordnet bzw. integriert ist, so kann diese Fahrzeugdecke auch belastet werden, so z.B. zum Transportieren von Gepäck, Fracht, etc. bzw. kann auch betreten werden durch ein oder mehrere Personen.

In einer vorteilhaften Ausgestaltung des dritten Aspekts ist die Anordnung direkt mit einem Fahrzeugrahmen des Fahrzeugs koppelbar. Aufgrund der Verwendung von zumindest einem Volumenelement lässt die Anordnung auch vorgegebene Verwindungen zu, ohne dass Schäden an der Zwischenstruktur und Deckschichten des jeweiligen Volumenelementes entstehen. So können während einer Fahrt problemlos durch den Fahrzeugrahmen bedingte Verwindung in die Anordnung eingeleitet werden. Dies hat gegenüber verwindungssteifen Fahrzeugaufbauten den Vorteil, dass keine teuren und aufwendigen Zwischenrahmen zwischen Fahrzeugaufbau und -rahmen vorgesehen werden müssen, die den Fahrzeugaufbau derart von dem Fahrzeugrahmen entkoppeln, dass schädliche Verwindungen keine Auswirkungen auf den Fahrzeugaufbau haben. Des Weiteren reduziert die Verwendung von Volumenelementen für die als Wohnkabine ausgeführte Anordnung auch in einem erheblichen Maße das Fahrzeuggewicht und trägt zu einem geringeren Kraftstoffverbrauch des Fahrzeugs bei.

In einer vorteilhaften Ausgestaltung des dritten Aspekts ist die Anordnung an einem vorhandenen Aufbau des Fahrzeuges befestigt. In dieser Form ist die Anordnung als Anbauteil an einem Fahrzeugaufbau, so z.B. einem Kofferaufbau oder einer Pritsche, befestigt.

Die Erfindung zeichnet sich gemäß einem vierten Aspekt aus durch ein Verfahren zum Herstellen einer Anordnung gemäß dem ersten Aspekt. Dabei wird das als Decke ausgebildete zumindest eine erste Volumenelement mit zumindest einer Seitenwand derart gekoppelt, dass ein Aufenthaltsraum für zumindest eine Person gebildet wird.

In einer vorteilhaften Ausgestaltung des dritten Aspekts wird das als Decke ausgebildete zumindest eine erste Volumenelement mit dem als Seitenwand ausgebildeten zumindest einen zweiten Volumenelement gekoppelt.

In einer weiteren vorteilhaften Ausgestaltung des dritten Aspekts wird zumindest ein weiteres als Zwischenwand ausgebildete Volumenelement und/oder das als Seitenwand ausgebildete zumindest eine zweite Volumenelement mit dem als Boden ausgebildeten zumindest einen dritten Volumenelement gekoppelt.

Weitere Vorteile und Merkmale der vorliegenden Erfindung ergeben sich aus der folgenden beispielhaften Beschreibung derzeit bevorzugter Ausführungsformen.
- Fig. 1: Schematische Darstellung eines Volumenelementes,
- Fig. 2: Darstellung einer Anordnung mit einem Volumenelement,
- Fig. 3: Darstellung einer weiteren Anordnung mit einem gekrümmten Volumenelement,
- Fig. 4: zwei übereinander angeordnete Anordnungen,
- Fig. 5: Fahrzeug mit einer als Wohnkabine ausgebildeten Anordnung.

In den Figuren werden gleiche Bezugszeichen für gleiche oder zumindest ähnliche Elemente, Komponenten oder Aspekte verwendet. Es wird darauf hingewiesen, dass die nachfolgend beschriebenen Ausführungsformen lediglich eine beschränkte Auswahl an möglichen Ausführungsvarianten der Erfindung darstellen. Insbesondere ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

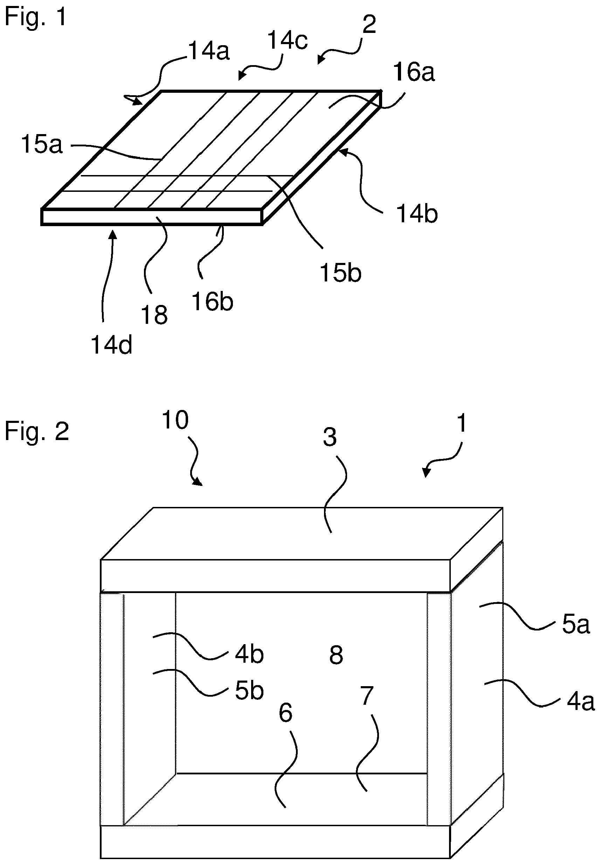

In Fig. 1 ist ein an sich plattenförmiges Volumenelement 2 in einem aufgeblasenen und/oder evakuierten Zustand, d.h. in einem Nutzungszustand, dargestellt. Das Volumenelement 2 weist mehrere Seitenkanten 14a, 14b, 14c, 14d auf. Die Seitenkanten 14a, 14b, 14c, 14d erstrecken sich in eine Dickenrichtung des Volumenelementes 2.

Das Volumenelement 2 weist ferner eine erste und eine zweite Deckschicht 16a, 16b sowie eine dazwischen angeordnete Zwischenstruktur 18 auf. An den Seitenkanten 14a, 14b, 14c, 14d kann jeweils eine Abschlusslasche verlaufen (nicht dargestellt). Diese verbindet an der jeweiligen Kante die erste Deckschicht 16a mit der zweiten Deckschicht 16b und ist mit der jeweiligen Deckschicht 16a, 16b jeweils fluiddicht verbunden, so z.B. verklebt, vernäht oder verschweißt. An den Ecken oder im Bereich der Ecken des Volumenelementes 2 sind die Abschlusslaschen miteinander fluiddicht verbunden. Alternativ kann die Abschlusslasche als Endlosmaterial ausgebildet sein und entlang aller Kanten 14a, 14b, 14c, 14d mit der ersten und zweiten Deckschicht 16a, 16b verbunden sein. Mittels der Abschlusslasche und der ersten und zweiten Deckschicht 16a, 16b kann somit im Volumenelement 2 ein fluiddichter Raum geschaffen werden, der mit einem

Überdruck und/oder Unterdruck beaufschlagbar ist. Diesem fluiddichten Raum ist die Zwischenstruktur 18 des Volumenelementes 2 zugeordnet.

Die erste und zweite Deckschicht 16a, 16b ist flexible ausgebildet und weist jeweils zumindest eine Materialschicht auf. Alternativ kann die jeweilige Deckschicht auch als Laminat mit mehreren Schichten ausgebildet sein. So kann die jeweilige Materialschicht der Deckschicht beispielsweise aus einem Kunststoffmaterial hergestellt sein, so z.B. aus PVC, Nylon, etc. Die Abschlusslasche kann aus demselben Material wie die erste oder zweite Deckschicht 16a, 16b hergestellt sein. Die jeweilige Abschlusslasche kann sich aber in der Oberflächentextur und -beschaffenheit von der ersten und zweiten Deckschicht 16a, 16b unterscheiden.

Die Zwischenstruktur 18 kann beispielsweise eine Vielzahl von Stabilisierungsfäden aufweisen, die die erste Deckschicht 16a mit der zweiten Deckschicht 16b mechanisch koppeln. Vorzugsweise sind die Stabilisierungsfäden in der ersten und zweiten Deckschicht 16a, 16b mit ihren jeweiligen Enden vernäht oder verklebt. Die Stabilisierungsfäden sind beispielsweise aus Nylon hergestellt. In dieser Ausführung mit Stabilisierungsfäden entspricht der Aufbau der Zwischenstruktur 18 einer sogenannten Drop-Stitch Struktur, die in der Regel ihre Festigkeit erlangt, wenn der fluiddichte Raum der Zwischenstruktur 18 mit einem Gas gefüllt, so z.B. Luft, und mit einem ausreichenden Überdruck beaufschlagt ist.

Vorzugsweise weisen die Stabilisierungsfäden gleiche Längen auf und geben dadurch maßgeblich den Abstand zwischen der ersten und zweiten Deckschicht 16a, 16b und somit die Dicke des Volumenelementes 2 in Dickenrichtung und somit die Wandstärke vor. So kann das Volumenelement 2 beispielsweise eine Dicke von etwa 10 cm, 15 cm oder 20 cm aufweisen. Die Stabilisierungsfäden verlaufen typischerweise im aufgeblasenen Zustand auf kürzesten Weg zwischen der ersten und zweiten Deckschicht 16a, 16b, d.h. weisen einen relativ zu den Deckschichten senkrechten Verlauf aus. Alternativ oder zusätzlich können die Stabilisierungsfäden im aufgeblasenen Zustand aber auch einen relativ zu den Deckschichten anderen Winkel einnehmen, so z.B. einen X-förmigen Verlauf zwischen der ersten und zweiten Deckschicht 16a, 16b.

Ist die Zwischenstruktur 18 als Drop-Stitch Struktur ausgebildet, sind die erste und die zweite Deckschicht 16a, 16b typischerweise derart mechanisch gekoppelt, dass im aufgeblasenen Zustand, d.h. im Nutzungszustand, die erste und zweite Deckschicht 16a, 16b über die Erstreckung der Zwischenstruktur 18 im Wesentlichen parallel verlaufen.

Der Zwischenstruktur 18 können mehrere Kammern zugeordnet sein, die jeweils fluidisch getrennt voneinander ausgebildet sind. Dabei ist jeder Kammer ein Ventil zugeordnet über welches die Kammer entweder mit einem Überdruck oder Unterdruck beaufschlagbar ist. Diese Kammern mit den jeweiligen Kammerwandungen bilden dabei zumindest teilweise eine mechanische Kopplung zwischen der ersten und zweiten Deckschicht 16a, 16b. Die jeweilige Kammer der Zwischenstruktur 18 kann dabei als Drop-Stitch Struktur ausgebildet sein und eine Vielzahl von Stabilisierungsfäden zwischen der ersten und zweiten Deckschicht 16a, 16b aufweisen. Damit kann die jeweilige Drop-Stitch Kammer mit einem zugeordneten Überdruck beaufschlagt werden.

Alternativ können der Zwischenstruktur 18 auch mehrere fluidisch getrennte Kammern zugeordnet sein, von denen einige mit einem Granulat gefüllt sind. Die mit einem Granulat gefüllten Kammern können dann mit einem Unterdruck beaufschlagt werden. Als Granulat kann ein Material verwendet werden, welches in einem evakuierten Zustand eine hohe Reibung zwischen den Granulatpartikeln bewirkt und somit einen sehr steifen und stabilen Nutzungszustand einnimmt. Weitere Anforderungen an ein solches Granulat können ferner ein geringes Gewicht, Isolationseigenschaften, geringe Kosten, Verfügbarkeit, Umweltverträglichkeit etc. sein. Beispielsweise kann ein Kunststoff- oder Biogranulat oder andere Materialien verwendet werden.

Die nicht mit einem Granulat gefüllten Kammern werden dagegen vorzugsweise mit einem Überdruck beaufschlagt. Durch die Kombination von mit Granulat und einem Unterdruck beaufschlagbaren Kammern mit Kammern, die mit einem Überdruck beaufschlagbar sind, kann eine hohe Steifigkeit, insbesondere Druck- und Biegesteifigkeit, der Zwischenstruktur 18 und somit des Volumenelementes 2 erreicht werden. Vorzugsweise sind die evakuierbaren und mit Granulat gefüllten Kammern in der Nähe der Deckschichten und die aufblasbaren Kammern im Inneren des Volumenelementes angeordnet.

Ist die Zwischenstruktur 18 aus der Kombination von mit Granulat und einem Unterdruck beaufschlagbaren Kammern mit Kammern, die mit einem Überdruck beaufschlagbar sind, ausgebildet, ist die erste und die zweite Deckschicht 16a, 16b vorzugsweise derart mechanisch gekoppelt, dass im aufgeblasenen und evakuierten Zustand, d.h. im Nutzungszustand, die erste und die zweite Deckschicht 16a, 16b über die Erstreckung der Zwischenstruktur 18 im Wesentlichen parallel verlaufen. Alternativ kann die mechanische Kopplung zwischen der ersten und zweiten Deckschicht 16a, 16b derart mittels der Zwischenschicht 18 ausgebildet sein, dass der Abstand zwischen der ersten und zweiten Deckschicht 16a, 16b variiert.

Ferner ist in Fig. 1 angedeutet, dass der ersten Deckschicht 16a mehrere Längsversteifungselemente 15a und mehrere Querversteifungselemente 15b zugeordnet sind. Sowohl die Längsversteifungselemente 15a als auch die Querversteifungselemente 15b können jeweils als Stabilisierungselemente bezeichnet werden, die in der Ebene der jeweiligen Deckschicht verlaufen. Beispielsweise ist das jeweilige Versteifungselement 15a, 15b als flexibles Faserband mit einem hohen Elastizitätsmodul und einer hohen Zugfestigkeit ausgebildet, so z.B. als Aramidfaserband. Das Volumenelement 2 kann entweder Längsversteifungselemente 15a oder Querversteifungselemente 15b auf oder in der ersten oder zweiten Deckschicht 16a, 16b angeordnet bzw. integriert aufweisen. Alternativ kann, wie in Fig. 1 dargestellt, dass Volumenelement 2 sowohl die Längs-- 15a als auch Querversteifungselemente 15b aufweisen. Dabei können die Längs- 15a und Querversteifungselemente 15b einer Deckschicht zugeordnet sein oder sich in jeglichen denkbaren Kombinationen auf die erste und zweite Deckschicht 16a, 16b verteilen. Grds. ist es auch möglich, dass die Stabilisierungselemente in der Ebene der zugeordneten Deckschicht schräg oder diagonal verlaufen. Auch eine als großflächig ausgebildete Faserlage kann auf oder in der jeweiligen Deckschicht integriert sein und als Stabilisierungselement dienen.

In Fig. 2 ist eine Anordnung 1 dargestellt mit einer Decke 3, einer ersten und einer zweiten Seitenwand 5a, 5b sowie einem Boden 7. Die Decke 3, die erste und zweite Seitenwand 5a, 5b und der Boden 7 schließen einen Innenraum 8 ein. Auch wenn in Fig. 2 nicht explizit dargestellt, kann die Anordnung 1 auch eine Rückwand und eine Vorderwand umfassen, um einen geschlossenen Innenraum 8 zu bilden. Der Innenraum 8 kann als Aufenthaltsraum für ein oder mehrere Personen dienen und somit vor Witterungseinflüssen schützt.

Die Decke 3 ist vorzugsweise als ein erstes Volumenelement 3 ausgebildet. Derart ist das erste Volumenelement 3 analog zu dem Volumenelement 2 in Fig. 1 ausgebildet und weist somit eine erste und zweite Deckschicht 16a, 16b sowie eine dazwischen angeordnete Zwischenstruktur 18 auf. Die Seitenwände 5a, 5b können als herkömmliche Wand, so z.B. als Mauer- oder als Holzständerwerk, ausgebildet sein. Ebenso kann der Boden 7 beispielsweise als Beton- oder Holzboden ausgeführt sein. Vorzugsweise lagert das erste Volumenelement 3 zumindest teilweise auf den Seitenwänden 5a, 5b, so dass eine auf die Decke 3 wirkende Belastung über die Seitenwände 5a, 5b in den Boden geleitet werden kann. Dabei kann das erste Volumenelement 3 mit den herkömmlich ausgebildeten Seitenwänden 5a, 5b beispielsweise mittels entsprechender Profile, so z.B. H-Eckprofile, mechanisch gekoppelt sein. Dadurch kann auch sichergestellt werden, dass die Verbindungsstellen gegen Witterungseinflüsse geschützt sind.

Die erste und/oder zweite Seitenwand 5a, 5b kann alternativ auch jeweils als ein zweites Volumenelement 4a, 4b ausgebildet sein. Auch das jeweilige zweite Volumenelement 4a, 4b ist analog zu dem Volumenelement 2 in Fig. 1 und somit analog zu dem ersten Volumenelement 3 ausgebildet und umfasst eine erste und zweite Deckschicht 16a, 16b sowie eine dazwischen angeordnete Zwischenstruktur 18. Auch hier lagert das erste Volumenelement 3 zumindest teilweise auf entsprechenden Seitenkanten des jeweiligen zweiten Volumenelementes 4a, 4b, so dass Belastungskräfte zuverlässig über das jeweilige zweite Volumenelement 4a, 4b in den Boden abgeleitet werden können. Dabei kann das jeweilige als Seitenwand ausgebildete zweite Volumenelement 4a, 4b mit dem ersten Volumenelement 3 beispielsweise verklebt, vernäht und/oder verschweißt werden. Auch eine werkzeuglose Kopplung der Volumenelemente mittels Reiß- oder Klettverschluss oder Ringen und Gurten ist möglich.

Analog zu den Seitenwänden 5a, 5b können auch die Vorderwand und Rückwand als jeweiliges Volumenelement analog zu dem Volumenelement 2 in Fig. 1 ausgebildet sein. Auch die Kopplung zwischen dem ersten Volumenelement und dem jeweiligen als Vorder- oder Rückwand ausgebildeten Volumenelement kann analog zu der Kopplung mit den Seitenwänden 5a, 5b ausgebildet sein.

Des Weiteren kann der Boden 7 als ein drittes Volumenelement 6 ausgebildet und somit analog zu dem Volumenelement 2 in Fig. 1 sein. Auch das dritte Volumenelement 6 umfasst eine erste und zweite Deckschicht 16a, 16b sowie eine dazwischen angeordnete Zwischenstruktur 18. Die jeweilige Seitenwand 5a, 5b, als jeweiliges Volumenelement 4a, 4b oder herkömmlich ausgebildet, kann dabei zumindest teilweise auf dem dritten Volumenelement 6 lagern, so dass Kräfte zuverlässig über den Boden 7 abgeleitet werden können. Dabei kann das jeweilige als Seitenwand ausgebildete zweite Volumenelement 4a, 4b mit dem dritten Volumenelement 6 beispielsweise verklebt, vernäht und/oder verschweißt werden oder werkzeuglos mittels Reiß- oder Klettverschlüssen oder mittels Ringen und Gurten gekoppelt sein.

Die in Fig. 2 dargestellt Anordnung 1 kann auch als Gebäude 10 betrachtet werden, so z.B. als Tiny-House.

Alle in Fig. 2 gezeigte Volumenelemente sind jeweils in einem aufgeblasenen und/oder evakuierten Zustand dargestellt. Die Größe, insbesondere Länge, Breite und Dicke der jeweiligen Volumenelemente können unterschiedlich sein. So kann das erste Volumenelement 3 eine größere Dicke aufweisen als beispielsweise die als Seitenwände 5a, 5b ausgebildeten zweiten Volumenelemente 4a, 4b. Auch können die jeweilige Seitenwand 5a, 5b und/oder die Decke 3 und/oder der Boden 7 jeweils aus mehreren zugeordneten Volumenelementen ausgebildet sein.

Die Volumenelemente können beispielsweise miteinander verklebt, vernäht und/oder verschweißt oder werkzeuglos mittels Reiß- oder Klettverschlüssen oder mittels Ringen und Gurten gekoppelt sein.

Aufgrund der guten Wärme- und Schallisolierungseigenschaften des jeweiligen Volumenelementes kann ein weiterer Isolationsaufwand reduziert, ggf. sogar ganz eingespart werden. Aufgrund dessen kann das als Boden 7 ausgebildete dritte Volumenelement 6 direkt auf einen ebenen Erdbereich angeordnet werden und gleichzeitig eine ausreichende Wärmeisolierung zu der Erde erreicht werden. Alternativ kann der Boden auch aus mehreren übereinander angeordneten Volumenelementen gebildet sein, so dass die Wärmeisolierung zur Erde noch weiter verbessert wird. Um ein unerwünschtes Verschieben oder Verrücken der Anordnung 1 zu verhindern, so z.B. durch starken Wind, kann die Anordnung 1 in der Erde mittels Erdankern befestigt werden. Dazu kann das dritte Volumenelement 6 entsprechende Befestigungsmittel, wie beispielsweise angeklebte D-Ring Patches aufweisen. Alternativ oder zusätzlich wäre eine Beschwerung zumindest eines dritten Volumenelementes 6 mittels einer Wasserbefüllung möglich.

Grundsätzlich ist es ferner möglich, die als Seitenwand 5a, 5b, Decke 3 und/oder Boden 7 ausgebildeten Volumenelemente aktiv zu beheizen. So können beispielsweise Rohre durch die jeweiligen Volumenelemente geführt werden, durch die beispielsweise Warmwasser geleitet werden kann. Wasser kann beispielsweise durch Kollektoren erwärmt und dann durch die Volumenelemente geleitet werden. Alternativ oder zusätzlich können in den jeweiligen Volumenelementen der Anordnung 1 bereits flexible Leitungen, so z.B. elektrische Leitungen, Wasserversorgung- und Abwasserentsorgungsleitungen, etc. integriert sein. An den Verbindungsstellen mehrerer Volumenelemente können die integrierten Leitungen dann fluiddicht miteinander gekoppelt werden.

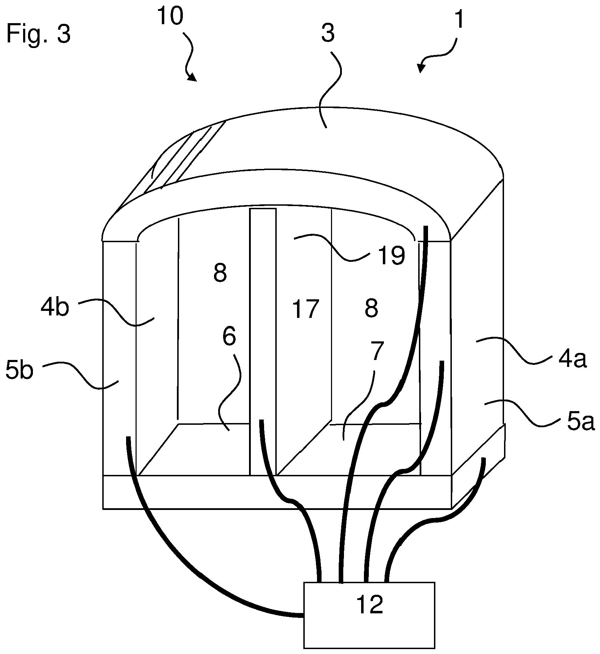

In Fig. 3 ist eine weitere Anordnung 1 dargestellt, die im Vergleich zu der Anordnung in Fig. 2 ein erstes Volumenelement 3 in einer gekrümmten Form umfasst. Dabei liegt das erste Volumenelement 3 beispielsweise auf entsprechenden Seitenkanten der Seitenwände 5a, 5b auf. Ferner weist die Anordnung 1 in Fig. 3 eine Zwischenwand 17 auf. Die Zwischenwand 17 ist beispielsweise als Leichtbauwand ausgebildet. Alternativ kann die Zwischenwand 17 auch als ein weiteres Volumenelement 19 ausgebildet sein, das senkrecht zu dem Boden 7 zwischen diesem und der Decke 3 angeordnet ist. Die Zwischenwand 17 ist vorzugsweise mit dem Boden 7 als auch der Decke 3 mechanisch gekoppelt, so z.B. geklebt, vernäht und/oder verschweißt. Vorzugsweise lagert die Zwischenwand 17 auf dem Boden 7. Die Decke 3 lagert auf einer zugeordneten Seitenkante der Zwischenwand 17. Dadurch kann die Zwischenwand 17 neben den Seitenwänden 5a, 5b auch zumindest teilweise die auf die Decke 3 wirkenden Kräfte zu dem Boden 7 hin ableiten. Das erhöht maßgeblich die Statik und Stabilität der Anordnung 1 und zwar unabhängig davon, in welcher Form die Decke 3 ausgebildet ist. Eine entsprechende Zwischenwand 17 kann somit auch in einer Anordnung 1 nach Fig. 2 vorgesehen sein.

Des Weiteren ist in Fig. 3 eine Überwachungseinheit 12 dargestellt. Diese ist mit einem oder mehreren Volumenelementen der Anordnung 1 derart gekoppelt, dass die Überwachungseinheit 12 einen Zustand des jeweiligen Volumenelementes erfassen kann. So wird mittels der Überwachungseinheit 12 beispielsweise ein Überdruck und/oder Unterdruck in dem jeweiligen Volumenelement erfasst. Dabei kann die Überwachungseinheit 12 ausgebildet sein, den für das jeweilige Volumenelement erforderlichen Über- bzw. Unterdruck bereitzustellen, wenn der erfasste Druck nicht mit einem vorgegebenen Referenzdruck übereinstimmt. Dazu kann die Überwachungseinheit 12 zentral ausgebildet sein und damit mit mehreren Volumenelementen parallel gekoppelt sein. Alternativ kann jedem Volumenelement eine eigene dezentrale Überwachungseinheit 12 zugeordnet sein, die den Druck des zugeordneten Volumenelementes überwacht. Dabei kann die zentrale oder dezentrale Überwachungseinheit 12 auch ausgebildet sein, den jeweiligen Druck in mehreren Kammern des jeweiligen Volumenelementes zu überwachen.

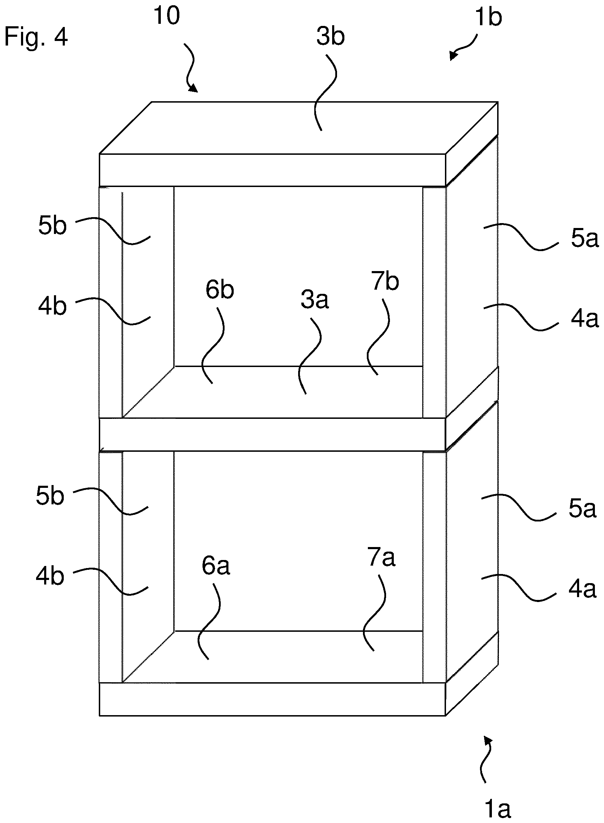

In Fig. 4 sind zwei Anordnungen 1a, 1b übereinander dargestellt. Die erste Anordnung 1a umfasst einen Boden 7a, Seitenwände 5a, 5b sowie ein als Decke 3a ausgebildetes erstes Volumenelement 3a. Die zweite Anordnung 1b ist auf der ersten Anordnung 1a angeordnet und umfasst Seitenwände 5a, 5b sowie eine Decke 3b. Ein Boden 6b der zweiten Anordnung 1b ist durch die Decke 3a der ersten Anordnung 1a gebildet. Die beiden Anordnungen 1a, 1b bilden beispielsweise ein Gebäude 10. Natürlich können auch entsprechende Rück- und Vorderwände vorgesehen sein (nicht dargestellt). Sowohl die Seitenwände 5a, 5b als auch der Boden 6a kann jeweils als Volumenelement 4a, 4b, 6a ausgebildet sein.

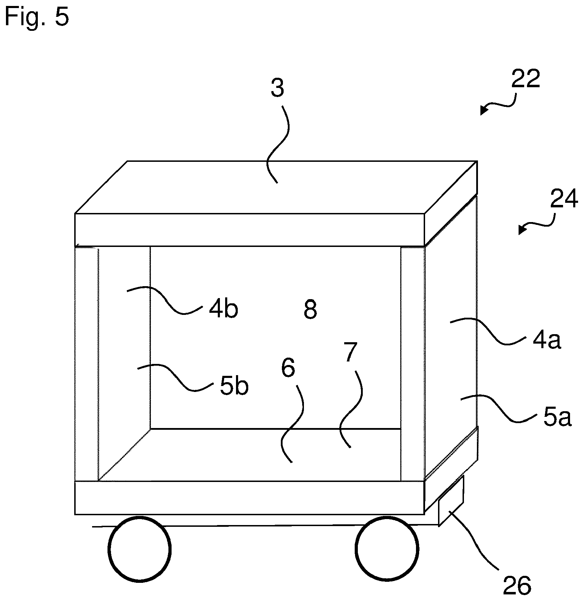

In Fig. 5 ist ein Fahrzeug 22 mit einer als Wohnkabine 24 ausgebildeten Anordnung dargestellt. Die Wohnkabine 24 ist direkt auf einem Fahrzeugrahmen 26 des Fahrzeugs 22 befestigt. Der Fahrzeugrahmen 26 ist als Teil des Fahrzeugfahrgestells und somit als tragendes Teil des Fahrzeugs 22 ausgebildet. Aufgrund der Flexibilität der als Wohnkabine 24 ausgebildeten Anordnung beschränkt diese nicht eine erforderliche Verschränkungsmöglichkeit des Fahrzeugrahmens während einer Fahrt, so z.B. im Gelände. Auch ist die als Wohnkabine ausgebildete Anordnung in sich so robust, dass eine durch den Fahrzeugrahmen 26 bedingte Verschränkung während der Fahrt die Wohnkabine nicht beschädigt oder anderweitig in ihrer Funktion beeinflusst. Anders als bei Fahrzeugaufbauten aus steifen Elementen, so z.B. GFK-Sandwich-Kabinen, kann somit ein schwerer und teurer Zwischenrahmen, der den Fahrzeugaufbau von dem Fahrzeugrahmen 26 entkoppelt, entfallen oder zumindest weit weniger aufwendig ausgeführt werden. Das ermöglicht ein besonders leichtes Fahrzeug 22 mit Wohnkabine 24. Aufgrund der Ausbildung der Wohnkabine 24 aus einer oder mehreren Anordnungen, kann die Wohnkabine 24 auch sehr leicht und flexibel ausgeführt werden. So kann die Wohnkabine 24 beispielsweise Stützen aufweisen, um diese vom Boden abzustützen und damit vom Fahrzeug 22 zu trennen, damit dieses anderweitig genutzt werden kann.

Besitzt das Fahrzeug 22 eine Druckluftanlage mit Luftpresser und entsprechenden Druckluftkesseln, kann diese Druckluftanlage zum Aufpumpen der Anordnung mitgenutzt werden. Aufgrund eines für das jeweilige Volumenelement erforderlichen Druckes zwischen 0,3 und 2 Bar ist zwischen der Druckluftanlage und dem zumindest einen Volumenelement der Anordnung typischerweise ein Druckminderer vorgesehen. Auch kann die Druckluftanlage des Fahrzeuges 22 mit der Überwachungseinheit gekoppelt sein, um den Druck in den Volumenelementen der Anordnung zu überwachen und ggf. den erforderlichen Druck bereitzustellen. Sofern das jeweilige Volumenelement auch evakuierbar ausgeführt ist, kann dieses mit einer Vakuumpumpe des Fahrzeugs 22 gekoppelt werden, sofern vorhanden. Damit lässt sich die Wohnkabine ideal in die Infrastruktur eines Fahrzeugs 22 integrieren, ohne das zusätzliches Zubehör beschafft werden muss.

In den als Seitenwänden 5a, 5b ausgebildeten zweiten Volumenelemente 4a, 4b sowie in den Vorder- und/oder Rückwänden der jeweiligen Anordnung können Öffnungen für Fenster und Türen vorhanden sein, so dass der durch die jeweilige Anordnung 1 gebildete Aufenthaltsraum auch begehbar und angenehm offen gestaltet ist. Auch ist es möglich, in dem jeweiligen ersten Volumenelement eine Öffnung für z.B. ein Deckenfenster oder ähnliches vorzusehen.

In einem Herstellungsverfahren der Anordnung 1 wird das als Decke 3 ausgebildete erste Volumenelement 3 mit zumindest einer Seitenwand 5a, 5b gekoppelt. Dabei kann die Decke 3 Befestigungselemente aufweisen, so z.B. Inserts, die eine Verschraubung des ersten Volumenelementes 3 mit der Seitenwand 5a, 5b ermöglicht. Alternativ oder zusätzlich kann das ersten Volumenelement 3 auch werkzeuglos mit der jeweiligen Seitenwand 5a, 5b ge- bzw. entkoppelt werden, so z.B. mittels Klett- oder Reißverschlüssen oder Ringen und Gurten. Dazu analog kann zumindest ein als Seitenwand 5a, 5b ausgebildetes zweites Volumenelement 4a, 4b und/oder ein als Zwischenwand 17 ausgebildetes weiteres Volumenelement 19 mit dem ersten Volumenelement 3 gekoppelt werden. Eine analoge Kopplung des zweiten und/oder des weiteren Volumenelementes 4a, 4b, 19 ist mit einem als Boden 7 ausgebildeten dritten Volumenelement 7 möglich.

### Bezugszeichenliste

- 1, 1a, 1b: Anordnung
- 2: Volumenelement
- 3, 3a, 3b: Decke, erstes Volumenelement
- 4a, 4b: zweites Volumenelement
- 5a, 5b: Seitenwand
- 6, 6a, 6b: drittes Volumenelement
- 7, 7a, 7b: Boden
- 8: Innenraum
- 10: Gebäude
- 12: Überwachungseinheit
- 14a-14d: Seiten kanten
- 15a, 15b: Stabilisierungselemente
- 16a, 16b: erste und zweite Deckschicht
- 17: Zwischenwand
- 18: Zwischenstruktur
- 19: weiteres Volumenelement
- 22: Fahrzeug
- 24: Wohnkabine
- 26: Fahrzeugrahmen

## Patentansprüche

1. Anordnung (1) mit einer Decke (3) und zumindest einer Seitenwand (5a, 5b), wobei durch die Decke (3) und die zumindest eine Seitenwand (5a, 5b) ein Aufenthaltsraum für zumindest eine Person gebildet ist, wobei die Decke (3, 3a, 3b) aus zumindest einem ersten aufblasbaren und/oder evakuierbaren Volumenelement (3, 3a, 3b) gebildet ist, das jeweils aus einer flexiblen ersten und einer flexiblen zweiten Deckschicht (16a, 16b) und einer dazwischen angeordneten Zwischenstruktur (18) gebildet ist, wobei die Zwischenstruktur (18) ausgebildet ist, die erste Deckschicht (16a) mit der zweiten Deckschicht (16b) derart mechanisch zu koppeln, dass in einem aufgeblasenen und/oder evakuierten Zustand die erste Deckschicht von der zweiten Deckschicht vorgegeben beabstandet ist.

2. Anordnung (1) nach Anspruch 1, bei der das als Decke (3, 3a, 3b) ausgebildete zumindest eine erste Volumenelement (3, 3a, 3b) gekrümmt oder geknickt ist.

3. Anordnung (1) nach Anspruch 1 oder 2, bei der die zumindest eine Seitenwand (5a, 5b) aus zumindest einem zweiten aufblasbaren und/oder evakuierbaren Volumenelement (4a, 4b) gebildet ist, welches jeweils analog zu dem ersten Volumenelement (3, 3a, 3b) ausgebildet ist und welches in einem aufgeblasenen und/oder evakuierten Zustand mit dem als Decke (3, 3a, 3b) ausgebildeten zumindest einen ersten Volumenelement (3, 3a, 3b) gekoppelt ist.

4. Anordnung (1) nach einem der vorstehenden Ansprüche mit einem Boden (7, 7a, 7b), der aus zumindest einem dritten aufblasbaren und/oder evakuierbaren Volumenelement (6, 6a, 6b) gebildet ist, welches analog zu dem zumindest einen ersten Volumenelement (3, 3a, 3b) ausgebildet ist.

5. Anordnung (1) nach einem der vorstehenden Ansprüche, die zumindest eine Zwischenwand (17) umfasst, die jeweils zwischen dem Boden (7, 7a, 7b) und der Decke (3, 3a, 3b) angeordnet ist.

6. Anordnung (1) nach einem der vorstehenden Ansprüche, bei dem zumindest ein Volumenelement (3, 3a, 3b, 4a, 4b, 6, 6a, 6b, 19) zumindest ein Stabilisierungselement (15a, 15b) vorgegebener Länge und Breite aufweist, das auf oder in der zugeordneten ersten oder zweiten Deckschicht (16a, 16b) angeordnet und in Längs- und/oder Querrichtung verläuft und dabei ausgebildet ist, eine zusätzliche Versteifung zu bewirken.

7. Anordnung (1) nach einem der vorstehenden Ansprüche, der eine Überwachungseinheit (12) zugeordnet ist, die ausgebildet ist, den Überdruck und/oder Unterdruck in zumindest einem Volumenelement (3, 3a, 3b, 4a, 4b, 6, 6a, 6b, 19) zu überwachen.

8. Anordnung (1) nach einem der vorstehenden Ansprüche, bei dem das zumindest eine erste Volumenelement (3, 3a, 3b) in dem aufgeblasenen und/oder evakuierten Zustand an der zumindest einen Seitenwand (5a, 5b) kipp-, schwenk- und/oder verschiebbar befestigt ist.

9. Fahrzeug (22) mit einer Anordnung (1) nach einem der vorstehenden Ansprüche.

10. Fahrzeug (22) nach Anspruch 9, bei dem die Anordnung (1) direkt mit einem Fahrzeugrahmen (26) des Fahrzeugs (22) koppelbar ist.

11. Fahrzeug (22) nach Anspruch 9 oder 10, bei dem die Anordnung (1) an einem vorhandenen Aufbau des Fahrzeuges (22) befestigt ist.

12. Verfahren zum Herstellen einer Anordnung (1) nach einem der Ansprüche 1 bis 8, bei dem das als Decke (3, 3a, 3b) ausgebildete zumindest eine erste Volumenelement (3, 3a, 3b) mit zumindest einer Seitenwand (5a, 5b) derart gekoppelt wird, dass ein Aufenthaltsraum für zumindest eine Person gebildet wird.

13. Verfahren nach Anspruch 12, bei dem das als Decke (3, 3a, 3b) ausgebildete zumindest eine erste Volumenelement (3, 3a, 3b) mit dem als Seitenwand (5a, 5b) ausgebildeten zumindest einen zweiten Volumenelement (4a, 4b) gekoppelt wird.

14. Verfahren nach Anspruch 12 oder 13, bei dem zumindest ein weiteres als Zwischenwand (17) ausgebildetes weiteres Volumenelement (19) und/oder das als Seitenwand (5a, 5b) ausgebildete zumindest eine zweite Volumenelement (4a, 4b) mit dem als Boden (7, 7a, 7b) ausgebildeten zumindest einen dritten Volumenelement (6, 6a, 6b) gekoppelt wird.
